# EUROPEAN PATENT APPLICATION

(11) **EP 3 398 705 A1**
(43) Date of publication of application: **07.11.2018**
(21) Application number: 17169378.1
(22) Date of filing: 04.05.2017
(51) Int. Cl.: B23F 1/00, B23F 19/02, C09K 3/14

(54) **APPARATUS FOR THE LAPPING OF GEARS AND METAL LAPPING COMPOUND FOR USE IN SUCH AN APPARATUS**

(71) Applicant: Klingelnberg AG, 8050 Zürich (CH)
(72) Inventor: Wyman, Hastings, Saline, MI Michigan MI 48176 (US); Müller, Hartmuth, 42857 Remscheid (DE)
(74) Representative: Heusch, Christian

(57) **Abstract**

Apparatus (100) for the lapping of gears (T, R), with
- a first spindle group (111) for chucking a first gear (T), whereby the first gear (T) is mountable on the first spindle group (111) so that it is rotatable about a first axis of rotation (TA),
- a second spindle group (112) for chucking a counterpart (R), whereby the counterpart (R) is mountable on the second spindle group (112) so that it is rotatable about a second axis of rotation (RA),
- at least one spindle drive (113, 114) for rotating the first spindle group (111) or the second spindle group (111),
- multiple additional axis (LA1, LA2, LA3) enabling the first gear (T) to be engaged with the counterpart (R) in order to perform a lapping operation during which the first gear (T) rotates or is rotated about the first axis of rotation (TA) and the counterpart (R) rotates or is rotated about the second axis of rotation (RA),
- a fluid system (30) for supplying a lapping compound (20) into an area (aB) where during the lapping operation the first gear (T) engages with the counterpart (R),
- and a sensing system (40) for determining optic and/or electric and/or magnetic properties of the lapping compound (20).

## Description

### Field of the Invention

Subject of the invention is an apparatus for the lapping of gears and a specific lapping compound for use in such an apparatus.

### Background of the Invention, Prior Art

There are various approaches for the fine machining of gears. The gear lapping is widely used for the purposes of hard finishing of gears.

In a respective lapping machine, at least one gear is rotated (called engagement rotation) and put in engagement with another gear or tool (herein referred to as counterpart). A lapping compound (e.g. an oil with silicon carbide) is introduced into the active area of the lapping machine in order to provide an abrasive component in-between the meshing flanks of the gear and the counterpart.

In order to be able to carry out a lapping operation on bevel gears, typically, in addition to the engagement rotation one or more relative displacement movements (herein called additional movements) are being applied.

Lapping is a method which is for instance used for the final processing (finishing processing after the quenching) of the tooth flanks of bevel gear pairs (bevel gear trains). After a crown gear is mounted on a first spindle and a pinion, which is to be paired therewith, is mounted on a second spindle, typically the pinion is caused to rotate while the crown gear being engaged with the pinion runs along or is slowed down. The lapping compound is employed as grinding means while the two wheels are carrying out a continuous engagement rotation. During the lapping, additional movement(s) is/are being carried out in order to extend the lapping action to the total tooth flank surface of the two wheels.

Machines are being offered by the producers of lapping machines which differ from each other essentially by differently designed axial constellations. Most lapping machines are able to carry out three linear movements, whereby the two horizontal movements are a must, since otherwise a shifting of the pinion would quickly use up the backlash and thus result in a clamping, if the crown gear would not be moved alongside correspondingly. A vertical axis is required for the lapping of hypoid gears in order to adjust the axial offset and it can of course be used to displace the bearing pattern during the lapping.

Most widely used for gear lapping are lapping compounds which comprise an oil portion as fluid carrier and an abrasive portion. Corundum is often used as abrasive portion, since this material has a superior hardness (about 9.0 on the Mohs scale). It is, however, a problem of today's lapping compounds, that on the one hand the abrasiveness of the abrasive particles deteriorates (e.g. due to abrasive wear) and that on the other hand the lapping compound carries more and more metal chips and metal particles, the longer the compound is being used. There is another issue which needs to be addressed when using lapping compounds in a lapping machine. The abrasive portion has the tendency to settle in the reservoir if the lapping compound is not used. Fluid systems which are designed for supplying a constant quality lapping compound to the lapping machine's active area, thus comprise an agitator, stirrer or bubbler in order to ensure that a homogeneous mixture is provided at all times.

In order to deal with the metal chips and particles inside the lapping compound, the fluid system might comprise a magnet. This magnet attracts the metal and keeps the total volume of the lapping compound clean. Such a magnet has to be removed from the fluid system in order to remove the metal which has gathered over time.

High performance lapping compounds are getting more and more expensive if their characteristic properties are being developed further. In addition, the environmental and work safety regulations and laws are getting more and more rigorous.

It is an objective of the present invention to develop a fluid system for the handling and supplying of a lapping compound which ensures a constant quality, as far as the abrasiveness of the abrasive portion and the homogeneity of the overall lapping compound are concerned.

It is an objective of the present invention to develop a lapping machine which comprises such a fluid system and to provide a suitable lapping compound.

An apparatus of the invention is characterized by the features of the claim 1. A lapping compound for metal lapping is characterized by the features of claim 12.

Further preferred embodiments are given in the respective dependent claims.

According to the invention an apparatus for the lapping of gears is provided, which comprises
- a first spindle group for chucking a first gear, whereby the first gear is mountable on the first spindle group so that it is rotatable about a first axis of rotation,
- a second spindle group for chucking a counterpart, whereby the counterpart is mountable on the second spindle group so that it is rotatable about a second axis of rotation,
- at least one spindle drive for rotating the first spindle group or the second spindle group,
- multiple additional axis enabling the first gear to be engaged with the counterpart in order to perform a lapping operation during which the first gear rotates or is rotated about the first axis of rotation and the counterpart rotates or is rotated about the second axis of rotation,
- a fluid system for supplying a lapping compound into an area where during the lapping operation the first gear engages with the counterpart,
wherein in that the apparatus further comprises:
- a sensing system for determining optic and/or electric and/or magnetic properties of the lapping compound.

According to the invention a metal lapping compound for specific use in an apparatus of the invention is provided. This lapping compound at least comprises
- an oil portion as fluid carrier,
- an abrasive portion, and
- a polar portion,
altogether providing for an ion comprising liquid.

The apparatus of the invention is working reliably, if the metal lapping compound is a conductive non-aqueous electrolytic liquid or lapping compound is partially ionized, with a ratio of ionization in the range between 0,5 and 20%.

In addition, the invention concerns the removal or "inactivation" of the metal chips and metal particles since this is a pre-condition for a reliable detection of the lapping compound's state.

The invention enhances the uptime of the lapping apparatus and it reduces the maintenance expenditures since the intervention of an operator is rarely necessary.

### DRAWINGS

Further details and advantages of the invention are described in the following by means of implementation examples and with reference to the drawings.
- **FIG. 1**: shows a schematic top view of a lapping machine comprising a fluid system of the invention;
- **FIG. 2A**: shows a schematic section of a pipe or hose with a window to show the current composition of the lapping compound, which in the present example is only carrying abrasive particles, being caused to flow through this pipe or hose;
- **FIG. 2B**: shows the pipe or hose with of Fig. 2A, where the lapping compound in the present example carries abrasive particles being worn out plus metal chips or particles;
- **FIG. 3A**: is a schematic diagram used in order to describe basic aspects of a first embodiment of a fluid system comprising a sensing system of the invention;
- **FIG. 3B**: is a schematic diagram used in order to describe basic aspects of a second embodiment of a fluid system comprising a sensing system of the invention;
- **FIG. 3C**: is a schematic diagram used in order to describe basic aspects of a third embodiment of a fluid system comprising a sensing system of the invention;
- **FIG. 4A**: is a schematic diagram used in order to describe basic aspects of a first embodiment of a sensing system of the invention;
- **FIG. 4B**: is a schematic diagram used in order to describe basic aspects of a second embodiment of a sensing system of the invention;
- **FIG. 5**: is a schematic graph showing two absorption spectra as function of the wavenumber;
- **FIG. 6**: is a schematic diagram which shows a signal processing apparatus connected to a computer;
- **FIG. 7**: is a schematic diagram used in order to describe basic aspects of a yet another embodiment of a sensing system of the invention.

### DETAILED DESCRIPTION

In connection with the present description, terms are used which also find use in relevant publications and patents. It is noted however, that the use of these terms shall merely serve a better comprehension. The inventive idea and the scope of the patent claims shall not be limited in their interpretation by the specific selection of the terms. The invention can be transferred without further ado to other systems of terminology and/or technical areas. In other technical areas, the terms are to be employed analogously.

Lapping is herein referred to as meshing rotation of two gear elements (e.g. a crown gear T and a pinion R), or of a gear wheel and a lapping tool, with each other, whereby a contact is caused between the tooth flanks and where a lapping compound 20 is introduced in order to cause a metal removal at least on one of the gear elements T or R.

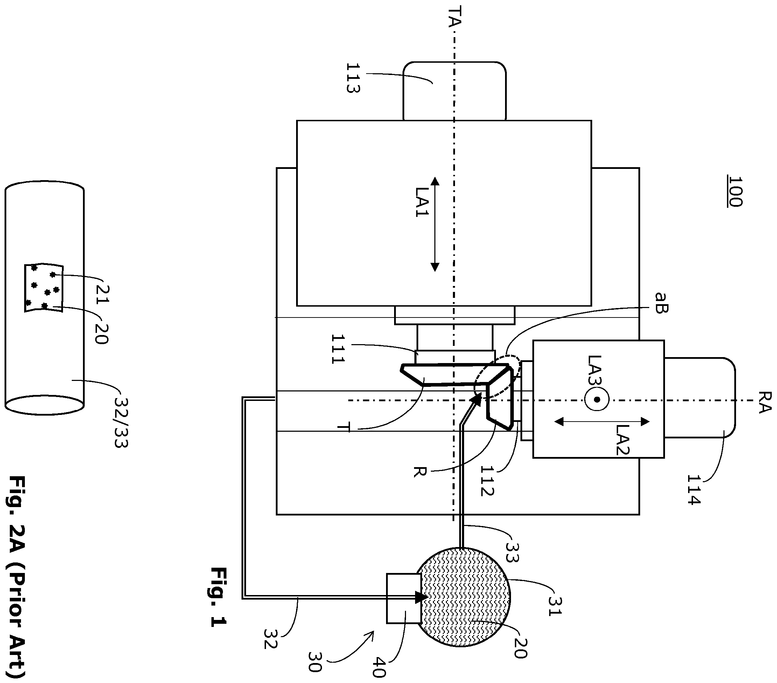

An exemplary lapping apparatus 100 of the invention is shown in Fig. 1. This apparatus 100 comprises a first spindle group 111 for chucking a first gear T. This first gear T is mountable on the first spindle group 111 so that it is rotatable about a first axis of rotation TA. The apparatus 100 further comprises a second spindle group 112 for chucking a counterpart R, whereby this counterpart R is mountable on the second spindle group 112 so that it is rotatable about a second axis of rotation RA. At least a first spindle drive 113 or a second spindle drive 114 is provided. At least one of the first spindle drive 113 and the second spindle drive 114 is provided for rotating the first spindle group 111 and/or the second spindle group 112.

A number of different embodiments are possible where either the first gear T is caused to rotate and where the counterpart R is rotating with the first gear T since it meshes therewith. Vice versa, the counterpart R is caused to rotate and the first gear T is rotating with the counterpart R since it meshes therewith. It is also possible to actively drive both the first gear T and the counterpart R or to drive only one of these two and to apply a braking force to the other.

The apparatus 100 further comprises multiple additional axis LA1, LA2, LA3 (e.g. multiple additional axial movement mechanisms) enabling the first gear T to be engaged with the counterpart R in order to perform a lapping operation, as needed. The example of Fig. 1 shows three linear axis LA1, LA2 and LA3. This specific constellation, however, is an example only.

There is a fluid system 30 for supplying the lapping compound 20 into an area (herein referred to as active area aB) where during the lapping operation the first gear T engages with the counterpart R. The active area aB is in Fig. 1 symbolized by a dashed oval.

The fluid system 30 is schematically illustrated in Fig. 1. It comprises in all embodiments an open or closed reservoir 31 containing the lapping compound 20. There are pipes and/or hoses 32 and 33 which provide for a circulation of the lapping compound 20.

In accordance with the invention, the fluid system 30 or the apparatus 100 of all embodiments further comprises a sensing system 40 for determining optical and/or electric and/or magnetic properties of the lapping compound 20. In Fig. 1, this sensing system 40 is depicted as a white box which is sitting at the downstream end of the pipe or hose 32.

The means for re-filling or replacing of the lapping compound 20 and the means for bringing (e.g. by spraying or pouring) the lapping compound 20 into the active area aB are not shown in the figures since such solutions are well known to a person skilled in the art.

Fig. 2A shows a schematic view of a short section of a pipe or hose 32, 33. In order to be able to show the lapping compound 20 flowing through this pipe or hose 32, 33, a small window is provided. In Fig. 2A, the abrasive particles 21 are symbolized by small star-shaped elements. New abrasive particles 21 and particles which are not worn out do have a rough uneven or coarse surface. The surface properties or characteristics of the abrasive particles 21 is mainly determined by its crystal structure, if one of the following abrasive materials are used:
- a metal oxide, e.g. Al₂O₃ (called Corundum), and/or
- a carbide, e.g. silicon carbide (SiC) or silica or bor carbid, and/or
- bor nitride (CBN) and/or
- diamond bort.

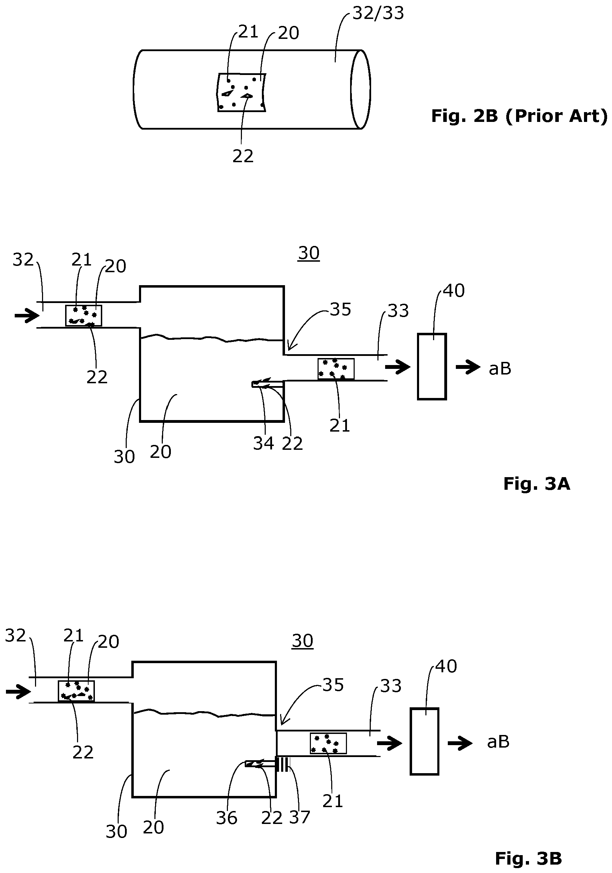

Fig. 2B shows the pipe or hose 32, 33 of Fig. 2A. In this case, however, a lapping compound 20 with worn-out abrasive particles 21 is shown. The worn-out abrasive particles 21 are symbolized by small circular elements. In addition, the lapping compound 20 of Fig. 2B carries metal chips and particles 22. These particles are symbolized by white symbols. The respective lapping compound 20 should not be used for lapping purposes anymore since its abrasiveness is reduced and since it is overloaded with metal chips and particles 22.

In the following, several approaches are described by means of which the sensing system 40 of the invention is able to determine the current properties of the lapping compound 20. This is essential, since without the capability to determine the current properties, it is not possible to automate the handling of the lapping compound 20.

If the lapping compound 20 is loaded with abrasive particles 21 and with metal chips and metal particles 22, it is difficult to determine the current properties of the lapping compound 20 as such. There are too many different effects which are interfering with each other.

It is thus preferred to use in all embodiments of the invention means for holding back the metal chips and particles 22 at least until the sensing system 40 has carried out a measurement of the abrasive particles 21.

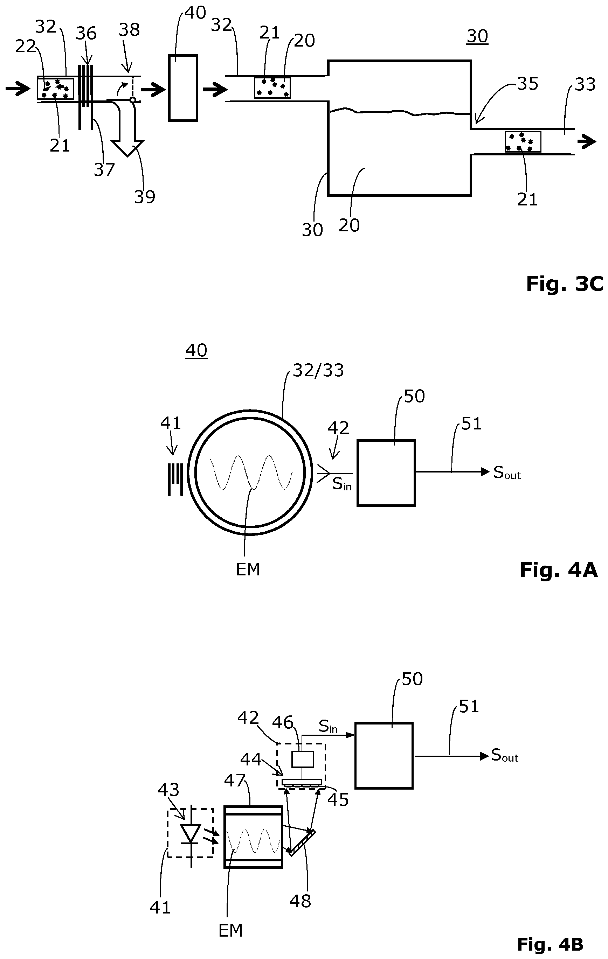

This can be achieved by either of the following solutions:
A1. a permanent magnet 34 inside or at the reservoir 31 which is strong enough in order to hold back all metal chips and particles 22 for a given period of time (cf. Fig. 3A);
A2. an electromagnet 36 inside or at the reservoir 31 which is strong enough in order to hold back all metal chips and particles 22 for a given period of time (cf. Fig. 3B);
A3. an electromagnet inside or at the pipe or hose 32, 33 which can be activated before the sensing system 40 is carrying out a measurement (cf. Fig. 3C).

The basic principle of the approach A1 is schematically illustrated in Fig. 3A. A pipe or hose 32 is collecting the lapping compound 20, after it has been used in an apparatus 100 (e.g. in the apparatus 100 of Fig. 1), for feeding the lapping compound 20 into the reservoir 30. The lapping compound 20 is carrying abrasive particles 21 which are not worn out and it is carrying metal chips and metal particles 22. The reservoir 30 is equipped with a permanent magnet 34 which is here located near a port or tap 35 where fresh lapping compound 20 is pumped towards the active area aB of the apparatus 100. The permanent magnet 34 is holding back metal chips and particles 22 so that the lapping compound 20 which is flowing through the pipe or hose 33 basically is free of metal chips and particles 22.

In the embodiment depicted in Fig. 3A, the sensing system 40 is located at the pipe or hose 33 which is connecting the reservoir 30 with the active area aB of the apparatus 100. In Fig. 3A, a white block is used to symbolize the sensing system 40. The lapping compound 20 is flowing through this sensing system 40. Since the lapping compound 20 is completely or almost free of any metal chips and particles 22, the measurement can be carried out without disturbances.

The permanent magnet 34 is designed so that it can be removed from the reservoir 30 for cleaning purposes. If the cleaning of the permanent magnet 34 is carried out in regular intervals, the permanent magnet 34 will always be able to magnetically attract all metal chips and particles 22.

Another arrangement is shown in Fig. 3B. Fig. 3B shows an implementation of the approach A2. An electromagnet 36 can be placed in or at the reservoir 30. In order to illustrate that the electromagnet 36 can be switched on and off, a coil 37 is shown. During a cleaning procedure, the electromagnet 36 can be removed from the reservoir. The metal chips and particles 22 can easily be separated from the electromagnet 36 after it has been switched off. All other aspects/elements of this embodiment are similar to Fig. 3A.

Yet another arrangement is shown in Fig. 3C. Fig. 3C shows an implementation of the approach A3. If an electromagnet 36 is used, it is possible to implement a scheme for the automated removal of metal chips and particles 22, as will be explained in connection with Fig. 3C. The embodiment of Fig. 3C comprises a sensing system 40 which is situated at the input side of reservoir 30, for instance. On the left hand side of Fig. 3C one can see that the lapping compound 20 is carrying non worn-out abrasive particles 21 as well as metal chips and particles 22. There is an electromagnet 36 placed at the pipe or hose 32. The electromagnet 36 is here symbolized by a coil 37 which is wound around the outside of the pipe or hose 32. Downstream of this electromagnet 36 there is a fluid valve or switch 38. This valve or switch 38 in the current situation is in an open position so that the lapping compound 20 is able to flow through the sensing system 40 towards the reservoir 30. If the valve or switch 38 is activated (by applying an electric current or a hydraulic pressure or a pneumatic pressure), the main stream is interrupted and a outlet 39 is opened.

The outlet 39, together with the valve or switch 38 and the electromagnet 36 can be used as follows. If the valve or switch 38 is activated, the main stream is interrupted so that no lapping compound 20 is flowing towards the sensing system 40 and the reservoir 30. If the electromagnet 36 is now switched off, all metal chips and particles 22 are released and flushed together with a small amount of the lapping compound 20 through the outlet 39 into a waste tank, for instance. This approach allows the overall system 30 to remove all metal chips and particles 22 which have gathered at the electromagnet 36. If the respective flushing scheme is activated from time to time, the overall system will be free or almost free of metal chips and particles 22.

The sensing system 40 thus can be operated without having to deal with metal chips and particles 22 in the lapping compound 20 flow. The small window at the pipe or hose 32 between the sensing system 40 and the reservoir 30 thus does not show any metal chips and particles 22.

These approaches A1, A2 and A3 can be combined with each other and it is to be mentioned that the Figures 3A through 3C are schematic figures only.

In accordance with the present invention, several detection schemes can be used. Details of these schemes will be described in the following sections.

A first embodiment of a sensing system 40 of the invention is schematically illustrated in Fig. 4A. One can see a cross-section of a pipe or hose 32, 33. The flow of the lapping compound 20 is perpendicular to the plane of Fig. 4A. The sensing system 40 comprises a transmitter 41 for transmitting an electro-magnetic field EM into the lapping compound 20. This field EM is schematically illustrated in Fig. 4A as periodic wave signal. There is a receiver 42 for receiving the field EM. This receiver 42 can for instance be located at the opposite side of the pipe or hose 32, 33, as shown in Fig. 4A. It is also possible to use different arrangements of the receiver 42 and/or the transmitter 41. In case of a reflection-based sensing system 40, the transmitter 41 and the receiver 42 are placed at one and the same side of the pipe or hose 32, 33.

The lapping compound 20 in most cases comprises a non-polar, neutral oil serving as fluid carrier. This fluid carrier is not showing any reaction if it is exposed to an electro-magnetic field EM below frequencies of about 10¹⁴ Hz. At higher frequencies (e.g. in the upper visible range up to UV light), the oil as fluid carrier might show a characteristic absorption behaviour, depending on its molecular structure and chemical bonds. The absorption in the range below frequencies of about 10¹⁴ Hz is largely related to the frequencies of oscillation of the outer electrons of their atoms.

At lower frequencies, e.g. in the infrared (IR) wavelength range (i.e. between 0,75 µm and 1000 µm), the absorption of the atoms and molecules of the fluid carrier is contributing to the absorption spectrum. In the near infrared wavelength range the absorption of molecules can be detected.

The chemical bonds within a molecule exhibit characteristic absorption spectra. One refers to these absorbencies as wavenumbers. If a known oil is used as fluid carrier, the absorption behaviour or spectrum of this fluid carrier is known. It can be defined by the specific wavenumbers of this fluid carrier, for instance. The chemical constituents of the fluid carrier (e.g. the hydrocarbons of the synthetic oil) absorb some of the electro-magnetic field EM at reproducible and specific wavenumbers.

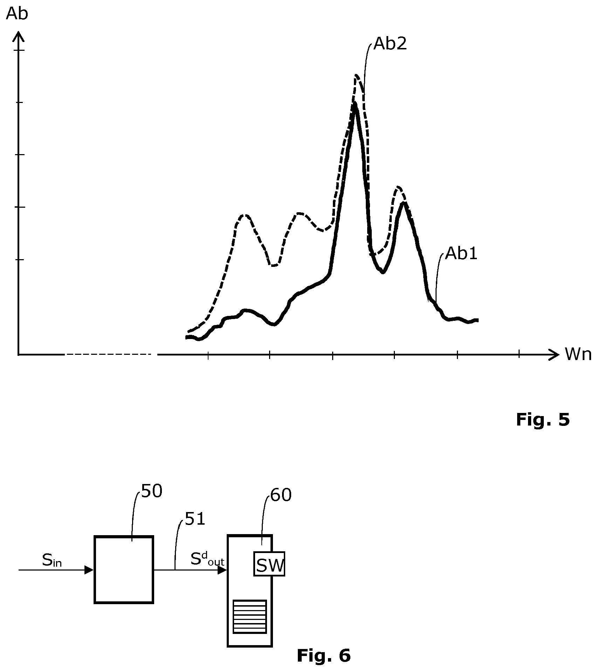

There is, however, an issue which needs to be taken into consideration. If new (hitherto unused oil) is used as fluid carrier, the absorbance of this oil is less pronounced as in oil that contains small amounts of water. The more water the oil contains, the higher the absorbance is. This effect is schematically illustrated in Fig. 5, where the curve Ab1 represents the absorbance of new oil and the curve Ab2 represents the absorbance of oil containing some water and/or small metal particles. However, the wavenumbers Wn which are used to define an oil remain more or less the same, provided the temperature of the oil does not go beyond a temperature during the lapping where the hydrocarbon chains start to disintegrate, and provided the portion of metal particles, carried by the oil, is small.

It has been demonstrated that the abrasive particles 21 do react if exposed to a certain wavelength range of electro-magnetic field EM, too. This means that the electro-magnetic field EM interacts with the lapping compound 20 and a characteristic response is "produced".

Monitoring a certain wavelength range of an electro-magnetic field EM thus is suitable as a direct measurement of the state of the abrasive particles 21.

Whereas the oil, which often serves as fluid carrier, shows a characteristic absorption spectrum in the IR-range, inorganic molecules do not absorb IR radiation. If the invention uses an IR-radiation as electro-magnetic field EM, one can determine the difference spectrum by subtracting the absorption spectrum of used oil from the absorption spectrum of new oil. The difference spectrum then only contains all other signal elements which are contributed by the abrasive particles 21.

The difference spectrum thus can be used to directly evaluate the abrasive particles 21.

There is a signal processing apparatus 50 which is linked to the transmitter 41 and/or receiver 42, for determining an electric and/or magnetic property/ies of the lapping compound 20. At an output side 51 of the signal processing apparatus 50 a signal Sₒᵤₜ is provided which can be used to trigger the refilling and/or replacing of the lapping compound 20.

Since for the first time it is now possible to determine the current status of the abrasive particles 21 inside the fluid carrier, it is also possible to recondition the lapping compound 20 by adding new abrasive particles 21.

Depending on the energy (amplitude and frequency) of the electro-magnetic field EM a certain amount of energy is reacting or interacting with the abrasive particles 21. To be more precise, the amount of energy of an electro-magnetic field EM is related to its wavelength. The smaller the wavelength, the more energy is "carried" or "conveyed" by the field or signal EM.

The reaction of the abrasive particles 21 depends on a number of aspects and the receiver 42 has to be designed so as to be able to detect the corresponding "reaction" of the abrasive particles 21. In all embodiments of the invention, the "reaction" might comprise reflective and/or transmissive components.

In practical implementations of this scheme, there is always a superposition of two or more than two physical effects. At radio and microwave frequencies, the electro-magnetic field EM is able to thermally influence the abrasive particles 21 and/or to induce currents. In the infrared range and at higher frequencies (up to the ultraviolet range), electrons inside the abrasive particles 21 can be excited, for instance. At higher frequencies the abrasive particles 21 are facing a certain degree of ionization and eventually the chemical bonds are broken up and the crystal structure is altered.

The lapping compound 20, if loaded with new abrasive particles 21 only, shows a characteristic absorption spectrum that can be detected by the receiver 42 and evaluated by the signal processing apparatus 50.

In all embodiments, the sensing system 40 may comprise the elements or building blocks of an infrared spectroscopy. The transmitter 41 in this case contains an IR source (e.g. an light emitting diode or laser) and the receiver 42 contains an infrared (array) detector. The infrared spectroscopy is an advanced technology, which is used for testing degradation and contamination in laboratories, for instance. Up and until now, this technology has not been used in connection with the on-the-fly analysing of lapping compounds 20.

For the purposes of the present invention, it is advantageous to feed the lapping compound 20 through a small fluid cell 47 which is designed to provide stable and reproducible conditions for the infrared light penetrating through the cell 47 and the lapping compound 20 contained therein. The fluid cell 47 might comprises elements which are transparent at the wavelength range of the field EM used for the investigation.

A grating or prism might be used at the output side of this cell 47 in order to reflect the impinging light towards the receiver's 42 infrared (array) detector 44. In Fig. 4B, this detector 44 is symbolized by an array of four light sensitive elements 45. In the present embodiment, the receiver 42 further comprises electronic circuitry 46 designed for the pre-processing of signals received.

The sensing system 40 of the invention might be based on the principles which have been described in connection with Fig. 4A and 4B. The actual set-up, however, depends on the wavelength range and on the lapping compound 20 actually used.

For the post-processing of the signal(s) Sᵢₙ produced by the sensing system 40, a signal processing apparatus 50 might be employed, as follows.

The signal(s) Sᵢₙ represents the absorbance Ab, as illustrated in Fig. 5. The signal processing apparatus 50 might in all embodiments of the invention comprises analog and/or digital circuits for the processing of the signal(s) Sᵢₙ. These circuits can for instance be designed in order to be able to detect local maxima and minima of the absorbance Ab and to relate these to the actual wavelength of the field EM. Such a signal processing apparatus 50 is able to detect whether certain peaks of the absorbance Ab are present or not. The signal processing apparatus 50 might further comprise circuits which are designed in order to be able to determine the amplitude of a peak.

The signal processing apparatus 50 thus is able to detect a characteristic "fingerprint" if fed with an appropriate signal(s) Sᵢₙ. If the signal processing apparatus 50 recognizes the "fingerprint" of a lapping compound 20 which is still in a good state, then this lapping compound 20 can be used for further lapping operations. If, however, the "fingerprint" of a worn-out lapping compound 20 is recognized, then the signal processing apparatus 50 might issue an output signal Sₒᵤₜ in order to trigger the partial or full replacement of the lapping compound 20.

In all embodiments of the invention, the output signal Sₒᵤₜ might be used in order to initiated an automated replacement or refilling of the reservoir 31, for instance. For this purpose, the fluid system 30 might comprise an inlet port with a valve which is controlled by the signal processing apparatus 50 and/or by a computer. The valve is switched open and a pump is activated to pump new lapping compound 20 from a separate tank into the reservoir 31. Before such a refilling process is carried out, some or all of the old lapping compound 20 can be drained from the reservoir 31 using another valve, for instance.

A preferred embodiment of the invention uses a combination of a signal processing apparatus 50 and a computer 60, as illustrated in Fig. 6. In order to be able to communicate with the computer 60, the signal processing apparatus 50 might comprise an analog-to-digital converter so as to transform the analog signal Sᵢₙ into a digital signal S^{d}ₒᵤₜ. If a computer 60 is employed, the post-processing will be carried out in the digital regime. For determining the current status of the lapping compound 20, the computer 60 is carrying out a comparison of the characteristic features of the digital signal S^{d}ₒᵤₜ with characteristic features of a reference specimen. The characteristic features of a reference specimen are stored in a memory of the computer 60 or are fetched from an external memory (e.g. from a database connected via a network).

For the purposes of the present invention, the computer 60 in all embodiments of the invention comprises a pattern recognition software SW which will carry out the above-mentioned comparison.

In order to speed up the processing, the signal processing apparatus 50 and/or the computer 60 might be designed so as to mask certain areas of the absorption spectrum. Since, as outlined further above, the abrasive particles 21 show very characteristic features in a certain wavelength range, the rest of the overall spectrum does not need to be investigated. If the not relevant areas of the spectrum are electronically or digitally suppressed, for instance, then the post-processing and/or the pattern recognition can focus on the relevant signal portions or pattern sequences only.

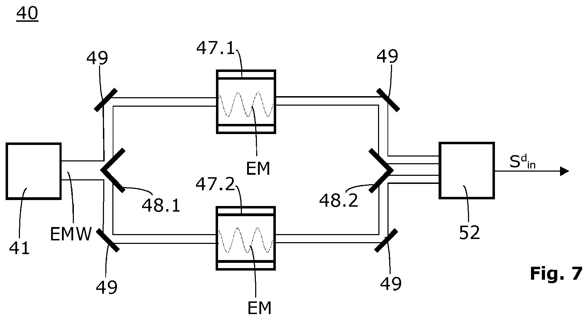

Instead of such an approach where the actual signal or spectrum is compared with the signal or spectrum of a reference specimen, the measurement as such can be carried out as comparative measurement. A respective embodiment is illustrated in Fig. 7. The sensing system 40 in this case comprises an electro-magnetic transmitter 41 (e.g. an infrared light emitting diode or laser) which emits an electro-magnetic wave EMW (e.g. a light beam) towards a beam splitter 48.1. This beam splitter 48 splits the wave EMW into two identical waves which are both reflected by mirrors 49 into a first cell 47.1 and into a second cell 47.2. The first cell 47.1 contains the actual lapping compound 20 whereas the second cell 47.2 contains the original (fresh) lapping compound as reference. The electro-magnetic field EM penetrates through the actual lapping compound 20 and the original (fresh) lapping compound. The two waves EMW are then reflected by mirrors 49 onto a second beam splitter 48.2. The second beam splitter 48.2 redirects the two waves EMW towards a device 52 which for instance comprises a detector which provides for a superposition of the two waves EMW. Due to this superposition, which is carried out in the optical regime, all identical wave features are suppressed. The detector of the device 52 then transforms the remaining signal into a digital signal S^{d}ᵢₙ which is forwarded to a signal processing apparatus 50 and/or computer 60, as illustrated in Fig. 6. In this case, the signal processing apparatus 50 does not require an analog-to-digital converter since the device 52 is already providing a digital signal S^{d}ᵢₙ.

The post-processing in the present case is focused around the analysing of the digital signal S^{d}ᵢₙ. The computer 60 is designed for comparing the signal S^{d}ᵢₙ with signals of a reference sample taken from a memory.

Instead of using an electro-magnetic wave EM, as described above, the sensing system 40 in all embodiments might comprise a transmitter 41 for transmitting an electric signal into the lapping compound 20. The sensing system 40 further comprises a receiver 42 for receiving a signal, based on the electric signal. A signal processing apparatus 50, 60 is linked to said transmitter 41 and/or said receiver 42, for determining the electric and/or magnetic property of the lapping compound 20. Such a sensing system 40 could for instance be used in order to measure the electric conductivity of the lapping compound 20.

Likewise, a capacitive sensing arrangement can be used for exposing the lapping compound 20 to a frequency signal and for determining an electro-magnetic response which is caused or triggered by the frequency signal. Such a sensing system 40 is able to determine, based on the response, the electric and/or magnetic property of the lapping compound 20.

If a capacitive sensing arrangement is employed, it is advantageous to design the respective sensing system 40 so that the lapping compound 20 can be exposed to a first frequency signal and a second frequency signal, the first frequency signal having a first frequency the second frequency signal having a second frequency. The first and second frequencies are different so that different properties of the lapping compound 20 can be determined.

**Reference numerals**

| | |
|---|---|
| Lapping compound | 20 |
| abrasive particle | 21 |
| metal chips and metal particles | 22 |
| | |
| fluid system | 30 |
| reservoir | 31 |
| pipe or hose | 32 |
| pipe or hose | 33 |
| permanent magnet | 34 |
| port or tap | 35 |
| electromagnet | 36 |
| coil | 37 |
| valve or switch | 38 |
| outlet | 39 |
| | |
| sensing system | 40 |
| electro-magnetic transmitter | 41 |
| receiver / detector | 42 |
| IR laser diode or light emitting diode | 43 |
| IR detector (array) | 44 |
| light sensitive elements | 45 |
| electronic circuitry | 46 |
| fluid cells | 47, 47.1, 47.2 |
| beam splitters | 48.1, 48.2 |
| mirrors | 49 |
| signal processing apparatus | 50 |
| output side | 51 |
| device | 52 |
| | |
| computer | 60 |
| Apparatus / Machine | 100 |
| first spindle group | 111 |
| second spindle group | 112 |
| spindle drive | 113 |
| spindle drive | 114 |
| | |
| area / active area | aB |
| absorbance | Ab |
| curves | Ab1, Ab2 |
| electro-magnetic signal or field | EM |
| electro-magnetic wave | EMW |
| counterpart (e.g. a pinion) / wheel | R |
| second axis of rotation | RA |
| first linear axle (G-axis) | LA1 |
| second linear axle (H-axis) | LA2 |
| Third linear axle (V-axis) | LA3 |
| signal | Sᵢₙ |
| signal | Sₒᵤₜ |
| digital signal | S^{d}ᵢₙ |
| digital signal | S^{d}ₒᵤₜ |
| Crown gear / wheel | T |
| first axis of rotation | TA |
| wavenumbers | Wn |

## Claims

1. An apparatus (100) for the lapping of gears (T, R), comprising
- a first spindle group (111) for chucking a first gear (T), whereby the first gear (T) is mountable on the first spindle group (111) so that it is rotatable about a first axis of rotation (TA),
- a second spindle group (112) for chucking a counterpart (R), whereby the counterpart (R) is mountable on the second spindle group (112) so that it is rotatable about a second axis of rotation (RA),
- at least one spindle drive (113, 114) for rotating the first spindle group (111) and/or the second spindle group (111),
- multiple additional axis (LA1, LA2, LA3) enabling the first gear (T) to be engaged with the counterpart (R) in order to perform a lapping operation during which the first gear (T) rotates or is rotated about the first axis of rotation (TA) and the counterpart (R) rotates or is rotated about the second axis of rotation (RA),
- a fluid system (30) for supplying a lapping compound (20) into an area (aB) where during the lapping operation the first gear (T) engages with the counterpart (R),
**characterized in that** the apparatus (100) further comprises:
- a sensing system (40) for determining optic and/or electric and/or magnetic properties of the lapping compound (20).

2. The apparatus (100) according to claim 1, wherein the counterpart (R) is selected from a group consisting of a second gear, a mating gear and a lapping tool.

3. The apparatus (100) according to claim 1 or 2, wherein said sensing system (40) comprises
- a transmitter (41) for transmitting an electro-magnetic field (EM) into said lapping compound (20),
- a receiver (42) for receiving an electro-magnetic field (EM), and
- a signal processing apparatus (50, 60), linked to said transmitter (41) and/or said receiver (42), for determining the electric and/or magnetic property of the lapping compound (20).

4. The apparatus (100) according to claim 1 or 2, wherein said sensing system (40) comprises
- a transmitter (41) for transmitting an electric signal into said lapping compound (20),
- a receiver (42) for receiving a signal, based on said electric signal, and
- a signal processing apparatus (50, 60), linked to said transmitter (41) and/or said receiver (42), for determining the electric and/or magnetic property of the lapping compound (20).

5. The apparatus (100) according to claim 1 or 2, wherein said sensing system (40) comprises
- a capacitive sensing arrangement for exposing the lapping compound (20) to a frequency signal and for determining an electro-magnetic response which is caused or triggered by said frequency signal and for determining, based on said response, the electric and/or magnetic property of the lapping compound (20).

6. The apparatus (100) according to claim 5, wherein the lapping compound (20) is exposed to a first frequency signal and a second frequency signal, the first frequency signal having a first frequency the second frequency signal having a second frequency, said first and second frequencies being different.

7. The apparatus (100) according to claim 6, wherein the first frequency signal and the second frequency signal are periodic signals.

8. The apparatus (100) according to one of the claims 1 - 7, wherein either an ion comprising liquid is used as lapping compound (20) or wherein the lapping compound comprises a liquid having a predetermined concentration of an ion.

9. The apparatus (100) according to one of the claims 1 - 7, further comprising an electromagnet (36) which is situated in or at a reservoir (31) or a pipe or hose (32, 33) of said fluid system (30).

10. The apparatus (100) according to claim 9, wherein a fluid valve or switch (38) near or at an outlet (39) is provided as part of said fluid system (30).

11. The apparatus (100) according to claim 10, wherein a scheme for the automated flushing of metal chips or metal particles (22) is implemented so that said fluid valve or switch (38) is opened, the metal chips or metal particles (22) are released by switching the electromagnet (36) off, and the metal chips or metal particles (22) are flushed through said outlet (39) out of said fluid system (30).

12. Metal lapping compound (20) for specific use in an apparatus (100) according to one of the claims 1 - 11, said lapping compound (20) at least comprising
- an oil portion as fluid carrier,
- an abrasive portion, and
- a polar portion,
altogether providing for an ion comprising liquid.

13. The metal lapping compound (20) according to claim 12 being a conductive non-aqueous electrolytic liquid.

14. The metal lapping compound (20) according to claim 12 or 13, wherein said polar portion comprises one or more of
- ammonia (NH₃) and/or
- acetic acid (CH₃CO₂H) and/or
- carbonic acid (H₂CO₃) and/or
- phosphoric acid (H₃PO₄).

15. The metal lapping compound (20) according to claim 12 or 13, wherein said lapping compound (20) is only partially ionized, with a ratio of ionization in the range between 0,5 and 20%.

16. The metal lapping compound (20) according to claim 12, wherein said oil portion comprises a low viscosity hydrocarbon.

17. The metal lapping compound (20) according to claim 12 or 13, wherein said abrasive portion comprises
- a metal oxide, and/or
- a carbide, and/or
- bor nitride (CBN) and/or
- diamond bort, and/or
- garnet, and/or
- bentonite.

18. The metal lapping compound (20) according to one of the claims 12 - 17, being an oil miscible fluid.

19. The metal lapping compound (20) according to one of the claims 12 - 17 having lubricating, lapping and cooling properties as well as having the properties of an electrolyte.
